# EUROPÄISCHE PATENTSCHRIFT

(11) **EP 1 644 205 B1**
(45) Veröffentlichungstag und Bekanntmachung des Hinweises auf die Patenterteilung: **09.01.2008**
(21) Anmeldenummer: 04740536.0
(22) Anmeldetag: 01.07.2004
(51) Int. Cl.: B60C 11/16

(54) **GLEITSCHUTZSTIFT**
ANTI-SKID SPIKE
TIGE ANTIDERAPANTE

(30) Priorität: 02.07.2003 DE 10329997
(43) Veröffentlichungstag der Anmeldung: 12.04.2006
(73) Patentinhaber: Sitek Spikes GmbH & Co. KG, 78733 Aichhalden (DE)
(72) Erfinder: KRAHL, Rainer, 78713 Schramberg (DE); ROTH, Stefan, 78733 Aichhalden (DE)
(74) Vertreter: Fleck, Hermann-Joseph
(86) Internationale Anmeldenummer: PCT/EP2004/007171
(87) Internationale Veröffentlichungsnummer: WO 2005/002885

(56) Entgegenhaltungen:
- WO-A-02/070287
- AT-B- 311 821
- DE-A- 2 117 151
- FR-A- 2 775 934
- US-A- 3 913 650

## Beschreibung

Die Erfindung betrifft einen Gleitschutzstift, der in eine Einbettungsöffnung einer Lauffläche, beispielsweise eines Reifens, einbringbar ist, mit einem Einsatzteil und einem Grundkörper, der eine Ausnehmung für die Aufnahme des Einsatzteiles aufweist.

Gleitschutzstifte nach dem Oberbegriff des Anspruchs 1 sind u.a. in der FR-A-2775934 und der WO-A-02/070287 beschrieben.

Solche Gleitschutzstifte, auch Spikes genannt, werden eingesetzt, um die Haftung von beispielsweise Reifen auf schnee- oder eisglatter Fahrbahn zu verbessern. Dabei ist allen bekannten Systemen gemein, dass im Betrieb, zum Beispiel bei einem Lenk- oder Bremsvorgang, ein verschleißfester Teil des Gleitschutzstiftes in den Schnee oder das Eis eindringt und so die Verzahnung des Reifens mit dem Untergrund und damit die übertragbare Kraft deutlich erhöht. Weiterhin weisen alle Systeme Halteelemente oder -bereiche auf, welche meist in Form von Flanschen ausgeführt sind, mit denen der Gleitschutzstift im Gummi des Reifens gehalten ist.

Weiterhin werden derartige Gleitschutzstifte auch bei Schuhen, Hufeisen, Schneeketten und sonstigen vor Rutschgefahr schützenden oder zu schützenden Einrichtungen verwendet.

Zur Montage des Gleitschutzstiftes wird dieser in eine Einbettungsöffnung in der Lauffläche des Reifens eingepresst. Der Flansch wird von dem elastischen Reifenmaterial umfasst und arretiert.

Der verschleißfeste Teil und der Haltebereich können aus einem Stück gefertigt werden. Alternativ können zumindest zweiteilige Systeme eingesetzt werden, bei denen ein verschleißfester Stift, meist ein Hartmetallstift, in eine Ausnehmung eines Halteelementes eingesetzt wird. Die Verbindung zwischen dem Stift und dem Halteelement erfolgt dabei durch löten, kleben oder pressen. Das Halteelement kann jetzt aus einem gut zu bearbeitenden Material mit günstigen Materialeigenschaften wie Stahl, Sintereisen, Aluminium oder Kunststoff gefertigt werden.

Aus der DE 25 12 071 ist ein dreiteiliger Gleitschutzstift bekannt. Dieser besteht aus einem mit einem Kopfflansch versehenen Rumpfteil, an dessen nach außen gerichtetem freien Ende ein Hartmetallstift sitzt, und aus einem das Rumpfteil lose umschlingenden, im Reifen-Laufstreifengummi befestigten Sperrring, dessen Außendurchmesser größer als der Außendurchmesser des Kopfflansches ist.

Diese Anordnung bewirkt, dass sich das Rumpfteil mit dem Hartmetallstift, wenn der Gleitschutzstift auf den Straßenbelag trifft, gegen die durch den Reifengummi aufgebrachten Rückstellkräfte radial bewegen kann, während der Sperrring aufgrund seines gegenüber dem Kopfflansch des Rumpfteiles größeren Durchmessers stationär im Reifenmaterial gehalten ist. Durch die Bewegungsmöglichkeit des Rumpfteiles und des Hartmetallstiftes kann so die Kraft, mit der der Hartmetallstift auf den Straßenbelag drückt, reduziert werden, wobei die tatsächlich auftretenden Kräfte durch den Durchmesser des Kopfflansches beeinflusst werden können. Der fest arretierte Sperrring verhindert hingegen, dass das Rumpfteil mit dem Hartmetallstift aus dem Reifen geschleudert wird. Der Sperrring hat hierbei keinen Einfluss auf die Verbindung zwischen dem Rumpfteil und dem Hartmetallstift.

Aus der DE 691 26 448 ist ein Gleitschutzstift bekannt, dessen Material auf der Umfangsfläche gehärtet ist und der einen vergleichsweise grossen Durchmesser aufweist. Bei seitlicher Belastung durch Beschleunigung, Bremsen oder Kurvenfahrt kippt dieser Gleitschutzstift und greift dadurch am Aussenrand seiner Auflagefläche in den Strassenbelag.

Es ist Aufgabe der Erfindung, einen Gleitschutzstift der eingangs erwähnten Art zu schaffen, welcher aus bisher nicht verwendeten bzw. realisierbaren Werkstoff- bzw. Form-Kombinationen bei gleichzeitig guter Formstabilität herstellbar ist.

Die Aufgabe der Erfindung wird dadurch gelöst, dass an dem Grundkörper ein Aufnahmeabschnitt ausgebildet ist; der zumindest teilweise von wenigstens einem Mantelteil umfasst ist, und dass das Mantelteil im montierten Zustand zumindest teilweise in dem Bereich um die Ausnehmung herum angeordnet ist.

Bei dieser Anordnung übernimmt der Grundkörper wie gewohnt die Aufgabe, das Einsatzteil zu halten. Der Grundkörper kann in seiner Materialauswahl und/oder Funktionalität dabei so ausgelegt sein, dass sich eine gute Fixierung des Einsatzteiles ergibt. Das Mantelteil fixiert die Verbindung zwischen dem Grundkörper und dem Einsatzteil. Damit kann eine stabile Verbindung des Gesamtsystems aufgebaut werden. Wenn dies gewünscht ist, kann das Mantelteil bezüglich seiner Materialeigenschaften auch auf das Verschleißverhalten des Gesamtsystems abgestimmt werden. Beispielsweise kann der Grundkörper aus verschleißweichem Material bestehen. Über das Mantelteil aus verschleißhärterem Material können dem Gesamtsystem die erforderlichen Verschleißwerte zugeordnet werden.

Das Mantelteil kann bei entsprechender Auslegung den Grundkörper gegen seitliche Biegung stabilisieren, so dass auch andere als bisher verwendbare und eventuell auch kostengünstige Werkstoffe für den Grundkörper einsetzbar sind.

In einer bevorzugten Ausführungsform ist vorgesehen, dass das Einsatzteil im montierten Zustand über den Mantel herausragt. Hierdurch wird erreicht, dass das Einsatzteil im Betrieb in Schnee und Eis eingedrückt wird und die Verzahnung des Reifens mit dem Untergrund und damit die übertragbare Kraft deutlich erhöht.

Eine besonders leichte Montage des Einsatzteils bei gleichzeitig fester Verbindung zum Grundkörper wird erreicht, indem das Einsatzteil einen kegelförmigen Abschnitt aufweist, der in montierten Zustand in eine korrespondierende Ausnehmung des Grundkörpers eingreift und dass eine form- oder kraftschlüssige Verbindung zwischen dem Mantelteil und dem Aufnahmeabschnitt des Grundkörpers ausgebildet ist.

Wird das Einsatzteil aus einem Hartwerkstoff, vorzugsweise aus Hartmetall, und das Mantelteil aus einem gegenüber dem Einsatzteil weniger verschleißfesten Werkstoff ausgeführt, kann erreicht werden, dass das Einsatzteil und das Material des Reifens ein dahingehend aufeinander abgestimmtes Verschleißverhalten aufweisen, dass im Betrieb die überstehende Länge des Einsatzteiles gegenüber der Lauffläche im wesentlichen erhalten bleibt und das Mantelteil und die Lauffläche in gleichem Maße verschleißen. Das Einsatzteil hat somit eine über die gesamte Lebensdauer gleichbleibende Gleitschutzwirkung.

Eine besonders kostengünstige Variante sieht vor, dass der Grundkörper aus einem gegenüber dem Einsatzteil und dem Mantelteil weniger verschleißfesten Material gefertigt ist, da der Grundkörper wegen seines hohen Volumenanteiles am Gesamtbauteil die Materialkosten maßgeblich bestimmt.

Ein besonders fester und dauerhafter Sitz des Mantelteils wird dadurch erreicht, dass das Mantelteil als geschlossener, ganzflächig an dem Aufnahmeabschnitt des Grundkörpers anliegender Ring, als partiell segmentweise anliegender Ring oder als Spannhülse in Form eines geschlitzten Ringes ausgebildet ist.

In einer bevorzugten Ausführung weist das Mantelteil an einem oder beiden seiner längsseitigen Enden eine zumindestens bereichsweise umlaufende Fase auf. Durch die beim Montagevorgang des Gleitschutzstiftes der Lauffläche zugewandten Fase gleitet das Mantelteil leicht in die Montageöffnung, durch die andere Fase wird das Abrollverhalten verbessert und die Geräuschentwicklung verringert. Ein Aufbau des Mantelteils mit beidseitiger Fase mit gleicher Geometrie ist vorteilhaft, da bei der Montage des Mantels auf den Aufnahmeabschnitt keine Verwechslungsgefahr besteht.

Eine besonders kostengünstige und einfach montierbare Ausführung des Mantelteils sieht vor, dass das Mantelteil rotationssymmetrisch aufgebaut ist.

Eine besonders gute Dichtwirkung des Mantelteils in der Lauffläche wird erreicht, indem der Grundkörper einen angeformten Flansch aufweist und der Durchmesser des Mantelteils grösser ist als der Durchmesser des Flansches des Grundkörpers. Durch einen grossen Durchmessser des Mantelteils erhält der Gleitschutzstift einen gegen verkippen stabilen Sitz, wodurch seine Gleitschutzwirkung verbessert wird.

Eine einfache und kostengünstige Herstellung wird dadurch erreicht, dass der Aufnahmeabschnitt des Grundkörpers und der dazu korrespondierende Durchbruch des Mantelteils zylindrisch ausgebildet ist. Wird der Aufnahmeabschnitt des Grundkörpers und der dazu korrespondierende Durchbruch des Mantelteils stumpfkegelförmig ausgebildet, kann auch bei großen Herstelltoleranzen ein fester Verbund von Grundkörper und Mantelteil erreicht werden. Ein fester Sitz des Mantelteils bei kostengünstigem Grundkörper wird erreicht, indem der Aufnahmeabschnitt des Grundkörpers zylindrisch und der dazu korrespondierende Durchbruch des Mantelteils stumpfkegelförmig, zur Lauffläche hin öffnend, ausgebildet ist, da die Einführung des Einsatzteils zum Aufpilzen des Grundkörpers führt und die Lösung des Mantelteils wirksam verhindert. Eine die Fertigungstoleranzen aufnehmende und gleichzeitig einen festen Verbund gewährleistende Ausführung sieht vor, dass der Aufnahmeabschnitt des Grundkörpers einen zunächst stumpfkegelförmigen Abschnitt und einen daran anschliessenden zylindrischen Abschnitt aufweisst, wobei der Durchbruch des Mantelteils einen zum stumpfkegelförmigen Abschnitt des Aufnahmeabschnitt korrespondierenden Bereich aufweist, an den sich eine konisch erweiternde Ausdehnungssenkung anschliesst.

Eine definierte Montage des Mantelteils auf dem Grundkörper und damit gut definierte Wirkung des Gleitschutzstiftes wird erreicht, indem zwischen Aufnahmeabschnitt und dem Flansch des Grundkörpers ein Anschlag in Form eines Vorsprunges vorgesehen ist.

Weist der Aufnahmeabschnitt des Grundkörpers ein Rastelement auf, das im montierten Zustand in eine Rastaufnahme des Mantelteils eingreift, kann erreicht werden, dass der Mantel mit vergleichsweise geringer Kraft montiert, gleichzeitig dennoch aber wirksam fixiert werden kann, da das Einsatzteil die Rastelemente des Grundkörpers aufspreizt und sichert.

Eine bevorzugte Ausführung sieht vor, dass der Aufnahmeabschnitt des Grundkörpers ein Rastelement und mindestens eine schlitzförmige Ausnehmung in Längsrichtung des Aufnahmeabschnittes aufweist und das Rastelement im montierten Zustand in eine Rastaufnahme des Mantelteils eingreift. Hierdurch wird erreicht, dass das Rastelement des Grundkörpers bei der Montage über einen besondes großen Weg verschoben werden kann und damit besonders weit und sicher in die Rastaufnahme eingreifen kann.

Wird das Mantelteil mehrteilig ausgeführt und weist es mindestens ein weiteres Ringmantelteil auf, kann das innen liegende Mantelteil aus weniger verschleißfestem, kostengünstigen Material und das Ringmantelteil aus dem ansonsten für das gesamte Mantelteil erforderlichen höherwertigen Material hergestellt werden.

Ein verbesserter gegen Ausreissen stabilerer Sitz des Gleitschutzstiftes im Reifenmaterial wird erreicht, indem das Mantelteil einen radial nach aussen vorstehenden Flansch aufweist und/oder indem der Grundkörper mindestens einen weiteren Flansch aufweist.

Eine verbesserte Gleitschutzwirkung des Gleitschutzstiftes wird erreicht, indem das Einsatzteil im montierten Zustand gegenüber dem Mantelteil zurückgesetzt ist und das Mantelteil gegenüber der Lauffläche vorsteht. Das in dieser Ausführung aus Hartwerkstoff oder einem anderen geeigneten Material hergestellte Mantelteil ist wegen der grösseren Oberfläche verschleißfester und kann durch die bei Belastung durch seitliche Kräfte durch leichte seitliche Verkippung besonders gut in Schnee und Eis eingreifen.

Die Erfindung wird im folgenden anhand der in den Figuren dargestellten Ausführungsbeispiele näher erläutert. Es zeigen teilweise im Schnitt, jeweils im oberen Figurenteil im demontierten Zustand und im unteren Figurenteil im montierten Zustand:
- Fig. 1: einen Gleitschutzstift mit einem Grundkörper mit zylindrischen Aufnahmeabschnitt
- Fig. 2: einen Gleitschutzstift gemäß Fig. 1 mit einem verbreiterten Mantelteil
- Fig. 3: einen Gleitschutzstift mit einem Grundkörper mit einem Aufnahmeabschnitt, der einen stumpfkegelförmigen Abschnitt aufweist
- Fig. 4: einen Gleitschutzstift mit einem Mantelteil, welches einen konischen Durchbruch, zur Lauffläche hin öffnend, aufweist
- Fig. 5: einen Gleitschutzstift mit einem Rastelement auf dem Aufnahmeabschnitt des Grundkörpers
- Fig. 6: einen Gleitschutzstift mit einer schlitzförmigen Ausnehmung im Bereich des Aufnahmeabschnittes des Grundkörpers
- Fig. 7: einen Gleitschutzstift mit einem Mantelteil, welches eine Ausdehnsenkung aufweist
- Fig. 8: einen Gleitschutzstift mit einem Mantelteil und einem zusätzlichen Ringmantelteil
- Fig. 9: einen Gleitschutzstift mit gegenüber der Lauffläche überstehendem Mantelteil, welches als Verschleißelement ausgebildet ist
- Fig. 10: einen Gleitschutzstift mit einem Grundkörper, der zwei Flansche aufweist (hier nur im montierten Zustand gezeigt)

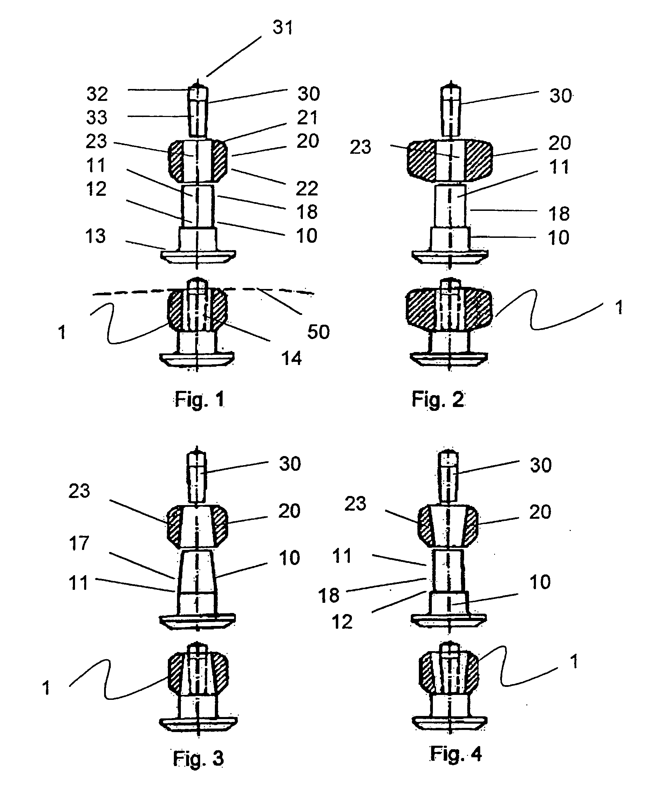

In der Fig. 1 wird ein Gleitschutzstift 1 gezeigt, wie er beispielsweise in eine Einbettungsöffnung einer Lauffläche 50 eines Reifens einbringbar ist. Der Gleitschutzstift 1 weist einen Grundkörper 10 auf, der an seinem einen Ende mindestens einen angeformten Flansch 13 trägt. Der Grundkörper 10 weist im Bereich des Flansches 13 einen Anschlag 12 und am anderen Ende einen Aufnahmeabschnitt 11 auf. Der Flansch 13 dient zur Verankerung des Grundkörpers 10 innerhalb der Einbettungsöffnung des Reifen. Der Aufnahmeabschnitt 11 dient zur Aufnahme eines Mantelteils 20, welches den Aufnahmeabschnitt 11 zumindest teilweise umfasst und einen zum Aufnahmeabschnitt 11 korrespondierenden Durchbruch 23 aufweist. Die Position des Mantelteils 20 auf dem Aufnahmeabschnitt 11 des Grundkörpers 10 wird dabei durch den Anschlag 12 bestimmt. Weiterhin weist der Aufnahmeabschnitt 11 eine im oberen Figurenteil nicht sichtbare Ausnehmung 14 auf, die zur Aufnahme eines Einsatzteils 30 dient, derart dass im montierten Zustand das Mantelteil 20 im Bereich um die Ausnehmung 14 angeordnet ist. Im montierten Zustand ragt das Einsatzteil 30 über das Mantelteil 20 hinaus.

Das Einsatzteil 30 ist stiftförmig ausgebildet und weist einen Stiftkopf 31, daran anschließend einen zylindrischen Abschnitt 32 und einen kegelförmigen Abschnitt 33 auf, welcher im montierten Zustand in die dazu korrespondierende Ausnehmung 14 des Grundkörpers 10 eingreift, derart, dass eine form- oder kraftschlüssige Verbindung zwischen der Innenfläche des Durchbruchs 23 des Mantelteils 20 und der Umfangsfläche des Aufnahmeabschnitts 11 des Grundkörpers 10 ausgebildet ist.

Das Mantelteil 20 kann als geschlossener ganzflächig an den Aufnahmeabschnitt 11 des Grundkörpers 10 anliegender Ring, als partiell segmentweise anliegender Ring, oder als Spannhülse in Form eines geschlitzten Ringes ausgebildet sein. Im gezeigten Beispiel weist das Mantelteil 20 an einem oder beiden seiner längsseitigen Enden eine umlaufende Fase 21, 22 auf und ist vorzugsweise rotationssymmetrisch aufgebaut. Es schließt im montierten Zustand vorzugsweise mit der Lauffläche 50 ab. Die Fase 22 dient zur Verringerung der erforderlichen Kraft bei der Montage des Gleitschutzstiftes 1 im Reifenmaterial. Die Fase 21 sorgt dafür, dass die Abrollgeräusche minimiert werden. Vorzugsweise sind die Fasen 21, 22 hinsichtlich ihrer Geometrie gleichartig ausgeführt, was Verwechslungen bei der Montage des Mantelteils 20 auf dem Grundkörper 10 ausschliesst.

Das Einsatzteil 30 ist im gezeigten Beispiel aus einem Hartwerkstoff, vorzugsweise aus Hartmetall gefertigt. Das Mantelteil 20 ist gegenüber dem Einsatzteil 30 vorzugsweise aus einem weniger verschleißfesten Werkstoff ausgebildet. Das Verschleißverhalten der Materialien von Einsatzteil 30 und Mantelteil 20 sowie das Material des Reifens sind derart aufeinander abgestimmt, dass im Betrieb die überstehende Länge des Einsatzteils 30 gegenüber der Lauffläche 50 im wesentlichen erhalten bleibt und das Mantelteil 20 und die Lauffläche 50 in gleichem Masse verschleißen. Der Grundkörper 10 kann aus einem gegenüber dem Einsatzteil 30 und dem Mantelteil 20 weniger verschleißfesten Material ausgebildet sein. Als Materialien für den Grundkörper 10 kommen beispielsweise Kunststoffe, Sinterwerkstoffe, Keramiken, beispielsweise Aluminiumoxid, Aluminium oder andere geeignete Werkstoffe in Frage.

Fig. 2 zeigt ein Ausführungsbeispiel gemäß Fig. 1, bei dem der Durchmesser des Mantelteils 20 größer ist als der Durchmesser des Flansches 13 des Grundkörpers 10. Dadurch wird eine verbesserte Abstützung des Gleitschutzstiftes 1 innerhalb der Einbettungsöffnung erreicht. Biegekräfte werden gleichmäßiger verteilt. Auch hier besitzt der Aufnahmeabschnitt 11 des Grundkörpers 10 einen vorzugsweise zylindrischen Abschnitt 18.

Die in Fig. 3 gezeigte Ausführungsvariante weist gegenüber den in Fig. 1 und Fig. 2 gezeigten Ausführungsformen einen Aufnahmeabschnitt 11 des Grundkörpers 10 mit einem stumpfkegelförmigen Abschnitt 17 auf. Der Durchbruch 23 des Mantelteils 20 besitzt eine dazu korrespondierende Geometrie. Dadurch wird eine selbst hemmende Geometrie erreicht, die zudem besonders fertigungstolerant ist.

Das Ausführungsbeispiel in Fig. 4 weist gegenüber den bisher beschriebenen Ausführungsformen einen Aufnahmeabschnitt 11 mit vorzugsweise zylindrischem Abschnitt 18 und einem Anschlag 12 auf. Das Mantelteil 20 besitzt demgegenüber einen stumpfkegelförmigen Durchbruch 23, der zur Lauffläche 50 hin öffnend ausgebildet ist Im montierten Zustand, wenn das Einsatzteil 30 in die Ausnehmung 14 eingesetzt ist, nimmt der Durchbruch 23 das radial aufdehnende Material des Aufnahmeabschnittes 11 auf und bildet eine form- bzw. kraftschlüssige Verbindung zwischen Mantelteil 20 und Grundkörper 10 aus.

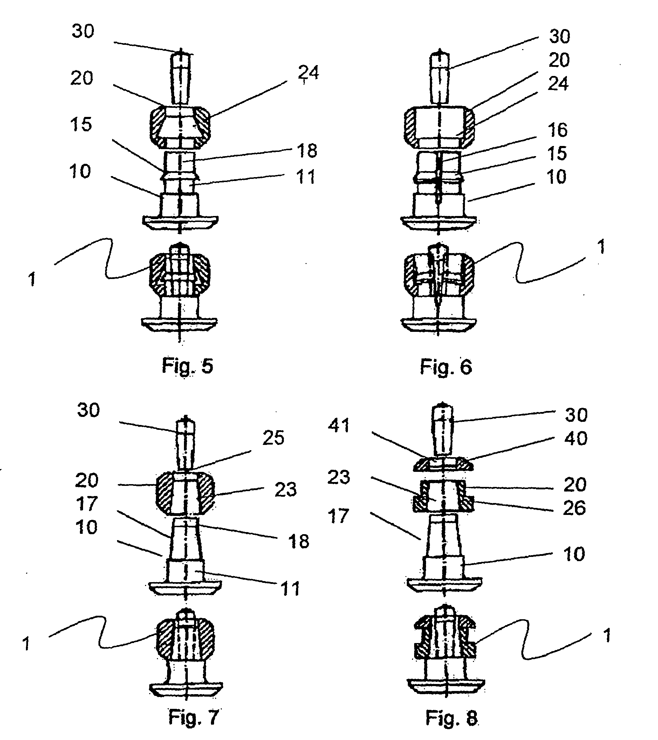

Ein weiteres Ausführungsbeispiel, wie es in Fig. 5 dargestellt ist, weist im Bereich des Aufnahmeabschnitts 11 des Grundkörpers 10 ein Rastelement 15 auf, das im montierten Zustand in eine Rastaufnahme 25 des Mantelteils 20 eingreift und, noch drehbar oder bereits fest, fixiert. Beim Einsetzen des Einsatzteils 30 in die Ausnehmung 14 wird erreicht, dass das Material des Aufnahmeabschnitts 11 radial gedehnt wird und sich gegen den zylindrischen Teil des Durchbruchs 23 oberhalb der Rastaufnahme 24 abstützt und somit das Mantelteil 20 auf dem Grundkörper 10 verklemmt.

Das Rastelement 15 und/oder das Mantelteil 20 sind dabei im Bereich der Rastverbindung flexibel ausgelegt. Denkbar ist auch vorzugsweise die Verwendung flexibler Materialien, beispielsweise Kunststoff. Denkbar ist auch die Verwendung eines Rastelementes als aufgesetztes Federelement in Form eines Federkranzes. Der Aufnahmeabschnitt 11 kann zur Aufnahme des Rastelements 15 eine Ausnehmung aufweisen, wodurch ein Verschieben auf dem Aufnahmeabschnitt 11 verhindert wird. Die Rastaufnahme 24 innerhalb des Durchbruchs 23 kann auch als separater Rasteinsatz ausgebildet sein, der zuvor in den Durchbruch 23 eingesetzt wird.

Das in Fig. 6 dargestellte Ausführungsbeispiel weist im Bereich des Aufnahmeabschnitts 11 des Grundkörpers 10 ein Rastelement 15 und mindestens eine schlitzförmige Ausnehmung 16 in Längsrichtung des Aufnahmeabschnitts 11 auf. Wird das Einsatzteil 30 in die Ausnehmung 14 des Grundkörpers 10 eingesetzt, wird der geschlitzte Bereich des Aufnahmeabschnitts 11 aufgeweitet. Das Rastelement 15 greift dabei in eine dazu korrespondierende Rastaufnahme 24 im Mantelteil 20 ein, wodurch ein fester Verbund von Grundkörper 10, Mantelteil 20 und Einsatzteil 30 nach dem Prinzip des Aufpilzen erreicht wird.

Die in Fig. 7 dargestellte Ausführungsform des Gleitschutzstiftes 1 besitzt einen Grundkörper 10, der einen Aufnahmeabschnitt 11 mit zunächst stumpfkegelförmigen Abschnitt 17 und daran anschließenden zylindrischen Abschnitt 18 aufweist, wobei der Durchbruch 23 des Mantelteils 20 einen zum stumpfkegelförmigen Abschnitt 17 des Aufnahmeabschnitts 11 korrespondierenden Bereich aufweist, an den sich eine konische erweiternde Ausdehnungssenkung 25 anschließt. Im montierten Zustand wird das Material des zylindrischen Abschnitts 18 des Aufnahmeabschnitts 11 durch den Einsatz des Einsatzteils 30 radial in die Ausdehnungssenkung 25 gepresst, wodurch der Verbund Grundkörper 10, Mantelteil 20 und Einsatzteil 30 hergestellt wird.

In Fig. 8 ist das Mantelteil 20 aus Fig. 7 zweiteilig ausgeführt und weist ein zusätzliches Ringmantelteil 40 auf. Das Ringmantelteil 40 besitzt eine konische Bohrung 41. Der Grundkörper 10 entspricht in seiner Ausgestaltung dem Grundkörper aus Fig. 7 und weist ebenfalls einen stumpfkegelförmigen Abschnitt 17 und einen daran anschließenden zylindrischen Abschnitt 18 am Aufnahmeabschnitt 11 auf. Im montierten Zustand wird das Material des zylindrischen Abschnitts 18 des Aufnahmeabschnitts 11 durch den Einsatz des Einsatzteils 30 radial in die konische Bohrung 41 des Ringmantelsteils 40 gepresst, wodurch der Verbund Grundkörper 10, Mantelteil 20, Ringmantelteil 40 und Einsatzteil 30 hergestellt wird.

Im gezeigte Ausführungsbeispiel besitzt das Mantelteil 20 einen radial nach außen vorstehenden Flansch 26, der für eine zusätzliche Verankerung des Gleitschutzstiftes 1 in der Lauffläche 50 sorgt.

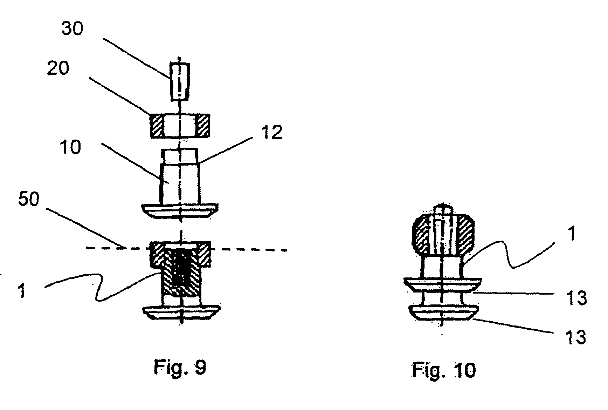

Fig. 9 zeigt eine Ausführungsform des Gleitschutzstiftes 1 bei der das Einsatzteil 30 im montierten Zustand gegenüber dem Mantelteil 20 zurückgesetzt ist und das Mantelteil gegenüber der Lauffläche 50 vorsteht. Das Mantelteil 20 ist dabei aus einem verschleißarmen Hartwerkstoff, vorzugsweise aus Hartmetall ausgeführt. Dadurch kann das Mantelteil bei seitlicher Krafteinwirkung durch leichte seitliche Verkippung besser in die Oberfläche aus Schnee oder Eis eingreifen.

Zusätzlich kann der Grundkörper 10, wie in Fig. 10 exemplarisch gezeigt, zwei oder mehrere Flansche 13 aufweisen, die zu einer verbesserten Verankerung in der Einbettungsöffnung der Lauffläche 50 führen.

Die gezeigten Ausführungsbeispiele gehen von einer Montageanordnung aus, bei der das Einsatzteil 30 in die von der Flanschseite des Grundkörpers 10 abgewandten Seite in den Aufnahmeabschnitt 11 des Grundkörpers 10 eingesetzt wird. Denkbar sind aber auch Ausführungsvarianten, bei denen das Einsatzteil 30 von der Flanschseite des Grundkörpers 10 her einsetzbar ist. Weiterhin ist es denkbar, entweder zuerst das Einsatzteil 30 in die Ausnehmung 14 im Aufnahmeabschnitt 11 und dann das Mantelteil 20 über den Aufnahmeabschnitt 11 oder umgekehrt zuerst das Mantelteil 20 über den Aufnahmeabschnitt 11 und im zweiten Schritt das Einsatzteil 30 in die Ausnehmung 14 zu montieren. Die erste Variante wird bevorzugt bei stumpfkegelförmigen Aufnahmeabschnitten 11 wie in Fig. 3 angewendet, die zweite Variante bei Typen des Gleitschutzstiftes 1, bei denen ein Aufpilzen des Grundkörpers 10 bewirkt werden soll, wie diese in den Figuren 5 bis 8 dargestellt sind. Auch bei diesen Varianten der Montage weist der Gleitschutzstift 1 wesentliche Merkmale der Ansprüche auf.

Insgesamt wird mit den beschriebenen Ausführungsbeispielen erreicht, dass ein stabiler Verbund zwischen Grundkörper 10, Mantelteil 20 und Einsatzteil 30 erzielt wird. Gleichzeitig wird eine kostengünstige Materialauswahl ermöglicht. Ebenso können bisher nicht verwendete bzw. verwendbare Materialkombinationen verwirklicht werden.

## Patentansprüche

1. Gleitschutzstift (1), der in eine Öffnung einer Lauffläche (50), beispielsweise eines Reifens eingebettet ist, mit einem Einsatzteil (30), einem Grundkörper (10), an dem ein Aufnahmeabschnitt (11) gebildet ist, der eine Ausnehmung (14) für die Aufnahme des Einsatzteils (30) aufweist und einem Mantelteil (20), das zumindest teilweise den Aufnahmeabschnitt (11) des Grundkörpers (10) form- oder kraftschlüssig umfasst,
**dadurch gekennzeichnet,**
**dass** das Mantelteil (20) die Verbindung zwischen dem Grundkörper (10) und dem Einsatzteil (30) fixiert.

2. Gleitschutzstift (1) nach Anspruch 1,
**dadurch gekennzeichnet,**
**dass** das Einsatzteil (30) im montierten Zustand über den Mantel herausragt.

3. Gleitschutzstift (1) nach einem der Ansprüche 1 oder 2,
**dadurch gekennzeichnet,**
**dass** das Einsatzteil (30) einen kegelförmigen Abschnitt (33) aufweist, der im montierten Zustand in eine korrespondierende Ausnehmung (14) des Grundkörpers (10) eingreift und dass eine form- oder kraftschlüssige Verbindung zwischen dem Mantelteil (20) und dem Aufnahmeabschnitt (11) des Grundkörpers (10) ausgebildet ist.

4. Gleitschutzstift (1) nach einem der Ansprüche 1 bis 3,
**dadurch gekennzeichnet,**
**dass** das Einsatzteil (30) aus einem Hartwerkstoff, vorzugsweise aus Hartmetall, und das Mantelteil (20) aus einem gegenüber dem Einsatzteil (30) weniger verschleißfesten Werkstoff besteht.

5. Gleitschutzstift (1) nach einem der Ansprüche 1 bis 4,
**dadurch gekennzeichnet,**
**dass** der Grundkörper (10) aus einem gegenüber dem Einsatzteil (30) und dem Mantelteil (20) weniger verschleißfesten Material gefertigt ist.

6. Gleitschutzstift (1) nach einem der Ansprüche 1 bis 5,
**dadurch gekennzeichnet,**
**dass** das Mantelteil (20) als geschlossener ganzflächig an dem Aufnahmeabschnitt (11) des Grundkörpers (10) anliegender Ring, als partiell segmentweise anliegender Ring oder als Spannhülse in Form eines geschlitzten Ringes ausgebildet ist.

7. Gleitschutzstift (1) nach einem der Ansprüche 1 bis 6,
**dadurch gekennzeichnet,**
**dass** das Mantelteil (20) an einem oder beiden seiner längsseitigen Enden eine zumindestens bereichsweise umlaufende Fase (21, 22) aufweist.

8. Gleitschutzstift (1) nach einem der Ansprüche 1 bis 7,
**dadurch gekennzeichnet,**
**dass** das Mantelteil (20) rotationssymmetrisch aufgebaut ist.

9. Gleitschutzstift (1) nach einem der Ansprüche 1 bis 8,
**dadurch gekennzeichnet,**
**dass** der Grundkörper (10) einen angeformten Flansch (13) aufweist und dass der Durchmesser des Mantelteils (20) grösser ist als der Durchmesser des Flansches (13) des Grundkörpers (10) ist.

10. Gleitschutzstift (1) nach einem der Ansprüche 1 bis 9,
**dadurch gekennzeichnet,**
**dass** der Aufnahmeabschnitt (11) des Grundkörpers (10) und der dazu korrespondierende Durchbruch (23) des Mantelteils (20) zylindrisch ausgebildet ist,
oder
**dass** der Aufnahmeabschnitt (11) des Grundkörpers (10) und der dazu korrespondierende Durchbruch (23) des Mantelteils (20) stumpfkegelförmig ausgebildet ist,
oder
**dass** der Aufnahmeabschnitt (11) des Grundkörpers (10) zylindrisch und der dazu korrespondierende Durchbruch (23) des Mantelteils (20) stumpfkegelförmig, zur Lauffläche (50) hin öffnend, ausgebildet ist
oder
**dass** der Aufnahmeabschnitt (11) des Grundkörpers (10) einen zunächst stumpfkegelförmigen Abschnitt (17) und einen daran anschliessenden zylindrischen Abschnitt (18) aufweisst, wobei der Durchbruch (23) des Mantelteils (20) einen zum stumpfkegelförmigen Abschnitt (17) des Aufnahmeabschnitt (11) korrespondierenden Bereich aufweist, an den sich eine konisch erweiternde Ausdehnungssenkung (25) anschließt.

11. Gleitschutzstift (1) nach einem der Ansprüche 1 bis 10,
**dadurch gekennzeichnet,**
**dass** zwischen Aufnahmeabschnitt (11) und dem Flansch (13) des Grundkörpers (10) ein Anschlag (12) in Form eines Vorsprunges vorgesehen ist.

12. Gleitschutzstift (1) nach einem der Ansprüche 1 bis 11,
**dadurch gekennzeichnet,**
**dass** der Aufnahmeabschnitt (11) des Grundkörpers (10) ein Rastelement (15) aufweist, das im montierten Zustand in eine Rastaufnahme (24) des Mantelteils (20) eingreift.

13. Gleitschutzstift (1) nach einem der Ansprüche 1 bis 12,
**dadurch gekennzeichnet,**
**dass** der Aufnahmeabschnitt (11) des Grundkörpers (10) ein Rastelement (15) und mindestens eine schlitzförmige Ausnehmung (16) in Längsrichtung des Aufnahmeabschnittes (11) aufweist, und das Rastelement (15) im montierten Zustand in eine Rastaufnahme (24) des Mantelteils (20) eingreift.

14. Gleitschutzstift (1) nach einem der Ansprüche 1 bis 13,
**dadurch gekennzeichnet,**
**dass** das Mantelteil (20) mehrteilig ausgeführt ist und mindestens ein weiteres Ringmantelteil (40) aufweist.

15. Gleitschutzstift (1) nach einem der Ansprüche 1 bis 14,
**dadurch gekennzeichnet,**
**dass** das Mantelteil (20) einen radial nach aussen vorstehenden Flansch (26) aufweist und/oder dass der Grundkörper (10) mindestens einen weiteren Flansch (13) aufweist.

16. Gleitschutzstift (1) nach einem der Ansprüche 1 bis 15,
**dadurch gekennzeichnet,**
**dass** das Einsatzteil (30) im montierten Zustand gegenüber dem Mantelteil (20) zurückgesetzt ist und das Mantelteil (20) gegenüber der Lauffläche (50) vorsteht.

## Claims

1. Anti-skid spike (1) which is embedded in an opening in a tread (50), for example of a tyre, having an insertion part (30), a base body (10) on which a receptacle section (11) is formed, which receptacle section has a recess (14) for receiving the insertion part (30), and a casing part (20) which at least partially surrounds the receptacle section (11) of the base body (10) in a positively or frictionally locking fashion, **characterized in that** the casing part (20) secures the connection between the base body (10) and the insertion part (30).

2. Anti-skid spike (1) according to Claim 1, **characterized in that** in the mounted state the r insertion part (30) projects beyond the case.

3. Anti-skid spike (1) according to one of Claims 1 and 2, **characterized in that** the insertion part (30) has a conical section (33) which in the mounted state engages in a corresponding recess (14) in the base body (10), and **in that** a positively or frictionally locking connection is formed between the casing part (20) and the receptacle section (11) of the base body (10).

4. Anti-skid spike (1) according to one of Claims 1 to 3, **characterized in that** the insertion part (30) is composed of a hard material, preferably of hard metal, and the casing part (20) is composed of a material which is less resistant to ware than the insertion part (30).

5. Anti-skid spike (1) according to one of Claims 1 to 4, **characterized in that** the base body (10) is fabricated from a material which is less resistant to ware than the insertion part (30) and the casing part (20).

6. Anti-skid spike (1) according to one of Claims 1 to 5, **characterized in that** the casing part (20) is embodied as a continuous ring which bears over the entire surface of the receptacle section (11) of the base body (10), as a ring which bears in partially segmented fashion or as a clamping sleeve in the form of a slotted ring.

7. Anti-skid spike (1) according to one of Claims 1 to 6, **characterized in that** the casing part (20) has, on one or both of its longitudinal ends, a chamfer (21, 22) which runs around at least in certain areas.

8. Anti-skid spike (1) according to one of Claims 1 to 7, **characterized in that** the casing part (20) is of rotationally symmetric design.

9. Anti-skid spike (1) according to one of Claims 1 to 8, **characterized in that** the base body (10) has an integrally formed flange (13), and **in that** the diameter of the casing part (20) is greater than the diameter of the flange (13) of the base body (10).

10. Anti-skid spike (1) according to one of Claims 1 to 9, **characterized in that** the receptacle section (11) of the base body (10) and the corresponding opening (23) in the casing part (20) are embodied in a cylindrical fashion,
or
**in that** the receptacle section (11) of the base body (10) and the corresponding opening (23) in the casing part (20) are embodied in the form of truncated cones,
or
**in that** the receptacle section (11) of the base body (10) is embodied in a cylindrical fashion, and the corresponding opening (23) in the casing part (20) is embodied in the form of a truncated, cone, opening toward the tread (50),
or
**in that** the receptacle section (11) of the base body (10) has a section (17) which is initially in the form of a truncated cone and an adjoining cylindrical section (18), wherein the opening (23) in the casing part (20) has a region which corresponds to the section (17) of the receptacle section (11) which is in the form of a truncated cone and which is adjoined by a conically widening expansion depression (25).

11. Anti-skid spike (1) according to one of Claims 1 to 10, **characterized in that** a stop (12) in the form of a projection is provided between the receptacle section (11) and the flange (13) of the base body (10).

12. Anti-skid spike (1) according to one of Claims 1 to 11, **characterized in that** the receptacle section (11) of the base body (10) has a latching element (15) which in the mounted state engages in a latching receptacle (24) in the casing part (20).

13. Anti-skid spike (1) according to one of Claims 1 to 12, **characterized in that** the receptacle section (11) of the base body (10) has a latching element (15) and at least one slot-shaped recess (16) in the longitudinal direction of the receptacle section (11), and in the mounted state the latching element (15) engages in a latching receptacle (24) in the casing part (20).

14. Anti-skid spike (1) according to one of Claims 1 to 13, **characterized in that** the casing part (20) is constructed with a plurality of parts and has at least one further annular casing part (40).

15. Anti-skid spike (1) according to one of Claims 1 to 14, **characterized in that** the casing part (20) has a flange (26) which protrudes radially outwards, and/or in that the base body (10) has at least one further flange (13).

16. Anti-skid spike (1) according to one of Claims 1 to 15, **characterized in that** in the mounted state the insertion part (30) is set back with respect to the casing part (20), and the casing part (20) protrudes with respect to the tread (50).

## Revendications

1. Tige antidérapante (1), qui est intégrée dans une ouverture d'une surface de roulement (50), par exemple celle d'un pneu, avec une pièce d'insertion (30), un corps de base (10) dans lequel est formée une section de réception (11) comportant un évidement (14) pour la réception de la pièce d'insertion (30), et une pièce de manteau (20) entourant au moins partiellement la section de réception (11) du corps de base (10), par complémentarité de forme ou par adhérence,
**caractérisée en ce que**
la pièce de manteau (20) fixe la liaison entre le corps de base (10) et la pièce d'insertion (30).

2. Tige antidérapante (1) selon la revendication 1,
**caractérisée en ce que**
la pièce d'insertion (30) dépasse du manteau à l'état monté.

3. Tige antidérapante (1) selon l'une des revendications 1 ou 2,
**caractérisée en ce que**
la pièce d'insertion (30) comporte une section en forme de quille (33) qui à l'état monté s'introduit dans un évidement correspondant (14) du corps de base (10), et **en ce qu'**une liaison est formée par complémentarité de forme ou par adhérence entre la pièce de manteau (20) et la section de réception (11) du corps de base (10).

4. Tige antidérapante (1) selon l'une des revendications 1 à 3,
**caractérisée en ce que**
la pièce d'insertion (30) est constituée d'un matériau dur, préférentiellement de métal dur, et la pièce de manteau (20) est constituée d'un matériau moins résistant à l'usure que la pièce d'insertion (30).

5. Tige antidérapante (1) selon l'une des revendications 1 à 4,
**caractérisée en ce que**
le corps de base (10) est constitué d'un matériau moins résistant à l'usure que la pièce d'insertion (30) et la pièce de manteau (20).

6. Tige antidérapante (1) selon l'une des revendications 1 à 5,
**caractérisée en ce que**
la pièce de manteau (20) est formée comme un anneau fermé dont toute la surface est en contact avec la section de réception (11) du corps de base (10), comme un anneau partiellement en contact par segments ou comme une douille de serrage en forme d'anneau fendu.

7. Tige antidérapante (1) selon l'une des revendications 1 à 6,
**caractérisée en ce que**
la pièce de manteau (20) comporte un chanfrein (21, 22) au moins partiellement périphérique sur l'une des extrémités longitudinales de la pièce de manteau ou les deux.

8. Tige antidérapante (1) selon l'une des revendications 1 à 7,
**caractérisée en ce que**
la pièce de manteau (20) est construite de façon symétrique en rotation.

9. Tige antidérapante (1) selon l'une des revendications 1 à 8,
**caractérisée en ce que**
le corps de base (10) comporte un rebord adapté (13) et **en ce que** le diamètre de la pièce de manteau (20) est supérieur au diamètre du rebord (13) du corps de base (10).

10. Tige antidérapante (1) selon l'une des revendications 1 à 9,
**caractérisée en ce que**
la section de réception (11) du corps de base (10) ainsi que la percée correspondante (23) de la pièce de manteau (20) possèdent une forme cylindrique,
ou
**en ce que** la section de réception (11) du corps de base (10) et la percée (23) correspondante de la pièce de manteau (20) possèdent une forme de quille tronquée,
ou
**en ce que** la section de réception (11) du corps de base (10) possède une forme cylindrique et la percée correspondante (23) de la pièce de manteau (20) possède une forme de quille tronquée, ouverte vers la surface de roulement (50),
ou
**en ce que** la section de réception (11) du corps de base (10) comporte une section (17) initialement en forme de quille tronquée, suivie d'une section (18) cylindrique, la percée (23) de la pièce de manteau (20) comportant une région correspondant à la section (17) en forme de quille tronquée de la section de réception (11), suivie d'une fraisure d'expansion (25) à élargissement conique.

11. Tige antidérapante (1) selon l'une des revendications 1 à 10,
**caractérisée par**
une butée (12) en forme de saillie prévue entre la section de réception (11) et le rebord (13) du corps de base (10).

12. Tige antidérapante (1) selon l'une des
revendications 1 à 11,
**caractérisée en ce que**
la section de réception (11) du corps de base (10) comporte un élément d'encliquetage (15), qui à l'état monté s'introduit dans un logement d'encliquetage (24) de la pièce de manteau (20).

13. Tige antidérapante (1) selon l'une des
revendications 1 à 12,
**caractérisée en ce que**
la section de réception (11) du corps de base (10) comporte un élément d'encliquetage (15) et au moins un évidement en forme de fente (16) dans la longueur de la section de réception (11), et l'élément d'encliquetage (15) s'introduit à l'état monté dans un logement d'encliquetage (24) de la pièce de manteau (20).

14. Tige antidérapante (1) selon l'une des revendications 1 à 13,
**caractérisée en ce que**
la pièce de manteau (20) est conçue en plusieurs pièces et comporte au moins une autre pièce de manteau annulaire (40).

15. Tige antidérapante (1) selon l'une des revendications 1 à 14,
**caractérisée en ce que**
la pièce de manteau (20) comporte un rebord (26) dépassant radialement vers l'extérieur et/ou **en ce que** le corps de base (10) comporte au moins un autre rebord (13).

16. Tige antidérapante (1) selon l'une des revendications 1 à 15,
**caractérisée en ce que**
à l'état monté, la pièce d'insertion (30) est en retrait par rapport à la pièce de manteau (20) et la pièce de manteau (20) dépasse de la surface de roulement (50).
